# EUROPEAN PATENT APPLICATION

(11) **EP 4 806 961 A1**
(43) Date of publication of application: **16.09.2026**
(21) Application number: 26162025.6
(22) Date of filing: 03.03.2026
(51) Int. Cl.: C09D 11/108, C09D 11/107, C09D 11/322

(54) **AQUEOUS INK, INK CARTRIDGE AND INK JET RECORDING METHOD**

(30) Priority: 06.03.2025 JP 2025035131; 18.02.2026 JP 2026024755
(71) Applicant: Canon Kabushiki Kaisha, Tokyo 146-8501 (JP)
(72) Inventor: HAYASHI, Katsuhiro, Tokyo (JP)
(74) Representative: WESER & Kollegen Patentanwälte PartmbB

(57) **Abstract**

Provided is an aqueous ink for ink jet including a resin particle, which is capable of recording an image having satisfactory abrasion resistance while having satisfactory storage stability. The aqueous ink for ink jet includes a resin particle. The resin particle is formed of a first resin and a second resin. The first resin is a polyolefin resin having a melting point of 60°C or more to 130°C or less. The second resin is a copolymer having a unit derived from an α-olefin having 4 or more carbon atoms and a unit derived from an unsaturated dibasic acid.

## Description

### TECHNICAL FIELD

The present disclosure relates to an aqueous ink, an ink cartridge and an ink jet recording method.

### BACKGROUND

In recent years, opportunities of using an ink jet recording apparatus have been increasing in commercial printing fields and office printing fields. In the commercial printing fields and the office printing fields, there is a demand for an aqueous ink that provides an image having excellent abrasion resistance.

In, for example, Japanese Patent Laid-Open No. 2012-255089, there is a proposal of an aqueous ink containing a polyolefin resin dispersion liquid in order to improve the abrasion resistance of an image.

### SUMMARY

The present disclosure is directed to providing an aqueous ink for ink jet, which is capable of recording an image having excellent abrasion resistance while maintaining its storage stability. The present disclosure is also directed to providing an ink cartridge and an ink jet recording method each using the aqueous ink.

The present disclosure in its first aspect provides an aqueous ink as specified in claim1. Optional features are specified in claims 2 to 12.

According to the present disclosure, the aqueous ink for ink jet, which is capable of recording an image having excellent abrasion resistance while maintaining its storage stability, can be provided. In addition, according to the present disclosure, the ink cartridge and the ink jet recording method each using the aqueous ink can be provided.

Features of the present disclosure will become apparent from the following description of embodiments with reference to the attached drawings. The following description of embodiments is described by way of example.

### BRIEF DESCRIPTION OF THE DRAWINGS

Fig. 1 is a sectional view for schematically illustrating an ink cartridge according to one embodiment of the present disclosure.
Fig. 2A and Fig. 2B are views for schematically illustrating an example of an ink jet recording apparatus to be used in an ink jet recording method of the present disclosure. Fig. 2A is a perspective view of the main portion of the ink jet recording apparatus and Fig. 2B is a perspective view of a head cartridge.

### DESCRIPTION OF THE EMBODIMENTS

The present disclosure is described in more detail below by way of illustrative embodiments. In the present disclosure, when a compound is a salt, the salt is present in a state of dissociating into ions in an ink, but the expression "contains the salt" is used for convenience. In addition, an aqueous ink for ink jet is sometimes simply described as "ink". Physical properties are values at normal temperature (25°C), normal pressure (1 atm=101,325 Pa), and normal humidity (relative humidity: 50%) unless otherwise specified. In addition, with regard to a resin, the term "unit" means a unit structure corresponding to one monomer unless otherwise specified. The descriptions "(meth)acrylic acid" and "(meth)acrylate" represent "acrylic acid and methacrylic acid" and "an acrylate and a methacrylate", respectively.

The inventors have investigated the aqueous ink proposed in Japanese Patent Laid-Open No. 2012-255089. As a result, it has been found that it is difficult to record an image, which has a high level of abrasion resistance required in recent years, while maintaining the storage stability of the ink. The term "abrasion resistance" means such a property that a recorded image is less likely to be scratched or less likely to be peeled when a stress is applied to the image.

In addition, the term "storage stability of an ink" means such a property that the physical properties of the ink are less likely to change under the usage environment and distribution environment of the ink.

The inventors have investigated an ink containing a resin in order to improve the abrasion resistance of an image while maintaining the storage stability of the ink. In order to improve the abrasion resistance of the image, it is useful to cover the surface of the image with a component having low surface energy when a stress is applied to the image. This is because the stress can be suppressed from being directly applied to the image to deform the image. A polyolefin resin having a melting point of 60°C or more to 130°C or less has been found to be useful as a material providing such effect. When the polyolefin resin is present on the surface of the image, the polyolefin resin deforms to cover the surface of the image at the time of the application of the stress to the image, and hence the deformation of the image itself can be suppressed.

In the case of a polyolefin resin having a melting point of less than 60°C, the polyolefin resin is in a melted state or a state close thereto under the storage environment of an ink when the polyolefin resin is incorporated in the ink in a dispersed state to be described later. As a result, a precipitate is generated in the ink, and satisfactory storage stability cannot be obtained. Meanwhile, in the case of a polyolefin resin having a melting point of more than 130°C, the polyolefin resin itself cannot deform when a stress is applied to an image, and a force is directly applied to the image to deform the image, resulting in a state in which satisfactory abrasion resistance cannot be obtained.

However, the polyolefin resin having a melting point of 60°C or more to 130°C or less cannot be used alone in an ink because the polyolefin resin has no affinity for water or a low affinity for water.

The inventors have found that the following procedure provides an image having excellent abrasion resistance while maintaining the storage stability of an ink: a polyolefin resin having a melting point that falls within the above-mentioned range is used as a first resin; a resin particle is formed by using the first resin together with another second resin; and the resin particle is incorporated into the ink. A copolymer having units derived from each of an α-olefin having 4 or more carbon atoms and an unsaturated dibasic acid is used as the above-mentioned second resin. When the number of the carbon atoms of the α-olefin is less than 4, an interaction between the resins does not occur in the formation of the resin particle together with the polyolefin resin having a melting point that falls within the above-mentioned range, and a precipitate is generated in the ink, resulting in a state in which satisfactory storage stability cannot be obtained.

As described above, the polyolefin resin having a melting point of 60°C or more to 130°C or less is used as the first resin. In addition, the copolymer having the unit derived from the α-olefin having 4 or more carbon atoms and the unit derived from the unsaturated dibasic acid is used as a second resin. In addition, when an aqueous ink for inkjet including a resin particle formed of the specific first resin and second resin is used, an image having excellent abrasion resistance can be recorded while the storage stability of the ink is maintained.

### <Aqueous Ink>

An ink of the present disclosure is an aqueous ink for ink jet including a resin particle. In addition, the resin particle is formed of a first resin and a second resin. The first resin is a polyolefin resin having a melting point of 60°C or more to 130°C or less. The second resin is a copolymer having a unit derived from an α-olefin having 4 or more carbon atoms and a unit derived from an unsaturated dibasic acid.

Components for forming the ink of the present disclosure and the physical properties of the ink are described in detail below.

### (First Resin)

The ink includes, as the first resin, the polyolefin resin having a melting point of 60°C or more to 130°C or less (in the present disclosure, the resin may be simply described as "first resin" or "polyolefin resin"). The first resin forms the resin particle together with the second resin. The first resins, that is, the polyolefin resins each having a melting point of 60°C or more to 130°C or less may be used alone or in combination thereof in the resin particle.

The polyolefin resin is a compound in which an unsaturated hydrocarbon (olefin), such as ethylene, propylene or butadiene, is polymerized, and a raw material thereof is not required to be an olefin as long as the compound has a polyolefin resin structure as a chemical structure. For example, a paraffin wax and a microcrystalline wax, which are extracts from a petroleum wax, and a synthetic wax such as a Fischer-Tropsch wax using a natural gas as a raw material are also encompassed in the polyolefin resin of the present disclosure.

Polyethylene is preferred as the polyolefin resin because its melting point can be controlled. That is, the first resin preferably contains polyethylene, and is more preferably polyethylene. A commercially available polyolefin resin may be used as the polyolefin resin.

Examples of the commercially available polyolefin resin may include: "NOVATEC LL", "NOVATEC LD", "KN" and "HARMOREX" (manufactured by Japan Polyethylene Corporation); "PETROTHENE", "Nipolon-L" and "Nipolon-Z" (manufactured by Tosoh Corporation); "Hi-Wax" and "EXCEREX" (manufactured by Mitsui Chemicals, Inc.); and "Paraffin Wax", "Hi-Mic", "FT115", "FNP-0115", "SX105", "FT-0165" and "FT-0070" (manufactured by Nippon Seiro Co., Ltd.) in terms of product names or series names thereof.

### [Physical Properties of First Resin]

### [Melting Point of First Resin]

The first resin has a melting point of 60°C or more to 130°C or less, and preferably has a melting point of 90°C or more to 120°C or less. When the melting point of the polyolefin resin is less than 60°C, the polyolefin resin is in a melted state or a state close to the melted state under the storage environment of the ink, and a precipitate is generated in the ink. Thus, satisfactory storage stability cannot be obtained. Meanwhile, when the melting point of the polyolefin resin is more than 130°C, the polyolefin resin itself cannot deform at the time of the application of a stress to an image, and a force is directly applied to the image to deform the image. Thus, satisfactory abrasion resistance cannot be obtained. The polyolefin resin having a melting point of 60°C or more to 130°C or less can be obtained by polyolefin polymerization using a Ziegler catalyst or a metallocene catalyst. The melting point may be adjusted by the kind and molecular weight of the catalyst to be used. The term "melting point of a resin" means a melting peak temperature (the temperature of an endothermic peak based on melting) measured by differential scanning calorimetry (DSC) in conformity with JIS K 7121. In the present disclosure, it is determined that a melting peak is present when an endothermic amount obtained from the integral value of a peak is 20 J/g or more.

As described above, polyethylene is preferred as the first resin. Accordingly, the polyolefin resin more preferably contains polyethylene having a melting point of 90°C or more to 120°C or less, and the polyolefin resin is particularly preferably polyethylene having a melting point of 90°C or more to 120°C or less.

### (Second Resin)

The ink includes, as the second resin, the copolymer having the unit derived from the α-olefin having 4 or more carbon atoms and the unit derived from the unsaturated dibasic acid (in the present disclosure, the copolymer may be simply described as "second resin"). The second resin forms the resin particle together with the first resin. The second resins, that is, the copolymers each having the unit derived from the α-olefin having 4 or more carbon atoms and the unit derived from the unsaturated dibasic acid may be used alone or in combination thereof in the resin particle. It is preferable that the second resin is less likely to interfere with a lowering effect of the first resin on the surface energy of an image surface.

An acrylic resin or a styrene-acrylic resin, which is a general-purpose resin, increases the surface energy of the image surface. On the other hand, the copolymers having units derived from each of an α-olefin having four or more carbon atoms and an unsaturated dibasic acid are less likely to interfere with the above effect of the first resin. Therefore, the copolymers are used as the second resin for forming resin particles together with the first resin. The second resin may be synthesized by, for example, a method in conformity with "Production method of α-olefin-maleic anhydride copolymer" disclosed in Japanese Patent Laid-Open No. H01-79207.

### [α-Olefin]

An α-olefin having 4 or more carbon atoms may be used as the α-olefin. When the number of the carbon atoms of the α-olefin is less than 4, the interaction of the second resin with the first resin is insufficient, and separation within the resin particle or precipitation from the resin particle occurs. Thus, the storage stability of the ink cannot be maintained. The α-olefins each having 4 or more carbon atoms may be used alone or in combination thereof in one kind of the second resin (copolymer). That is, the second resin (copolymer) may have a unit derived from one kind of α-olefin among α-olefins each having 4 or more carbon atoms, or may have units derived from the respective two or more kinds of α-olefins.

Examples of the α-olefin having 4 or more carbon atoms may include 1-butene, 1-pentene, 1-hexene, 1-heptene, 1-octene, 1-nonene, 1-decene, 1-dodecene, 1-tetradecene, 1-hexadecene, 1-octadecene, 1-eicosene, 1-docosene, 1-tetracosene, 1-hexacosene, 1-octacosene, 1-triacontene, 1-dotriacontene, 1-tetratriacontene, 1-hexatriacontene, 1-octatriacontene and 1-tetracontene, and mixtures of two or more kinds thereof.

The number of the carbon atoms of the α-olefin is preferably 40 or less, more preferably 10 or more to 30 or less. When the number of the carbon atoms of the α-olefin is 10 or more, the second resin easily interacts with the first resin, and separation within the resin particle or precipitation from the resin particle is less likely to occur. Accordingly, the storage stability of the ink is further improved with ease. Meanwhile, when the number of the carbon atoms of the α-olefin is 30 or less, steric hindrance in a molecule of the second resin is less likely to occur, and hence an acid group derived from the unsaturated dibasic acid is likely to appear on the surface of the resin particle. Accordingly, the dispersion stability of the resin particle is easily improved, and the storage stability of the ink is further improved with ease.

### [Unsaturated Dibasic Acid]

A known unsaturated dibasic acid may be used as the unsaturated dibasic acid. Examples thereof may include maleic acid, fumaric acid, itaconic acid, citraconic acid, mesaconic acid, glutaconic acid, methylenesuccinic acid, allylmalonic acid, isopropylidenesuccinic acid, 2,4-hexadienedioic acid and acetylenedicarboxylic acid. The unsaturated dibasic acids may be used alone or in combination thereof. Of those, at least one kind of unsaturated dibasic acid selected from the group consisting of maleic acid, fumaric acid and itaconic acid is preferred.

Maleic acid is more preferred as the unsaturated dibasic acid because the stability of the resin particle can be improved by a high ratio of an acid group in the unit and the arrangement of the acid group at the time of the copolymerization of the acid with the α-olefin. That is, the unsaturated dibasic acid in the unit derived from the unsaturated dibasic acid for forming the second resin (copolymer) more preferably contains maleic acid, and is particularly preferably maleic acid.

### [Physical Properties of Second Resin]

### [Acid Value of Second Resin]

The acid value of the second resin is preferably 30 mgKOH/g or more to 250 mgKOH/g or less, more preferably 30 mgKOH/g or more to 150 mgKOH/g or less. When the acid value of the second resin is 30 mgKOH/g or more, the affinity of the second resin itself for an aqueous medium in the aqueous ink is easily improved. Accordingly, the stability of the resin particle is likely to be satisfactory, and the storage stability of the ink is further improved with ease. Meanwhile, when the acid value of the second resin is 250 mgKOH/g or less, the hydrophilicity of the second resin is moderately suppressed, and hence the interaction thereof with the first resin easily occurs. Accordingly, the stability of the resin particle becomes satisfactory, and the storage stability of the ink is further improved with ease. When the acid value of the second resin is 150 mgKOH/g or less, the storage stability is further improved. The acid value of the second resin may be adjusted by the ratio of the unit derived from the unsaturated dibasic acid in the second resin. The acid value of the second resin may be measured by neutralization titration utilizing a potential difference through use of a potassium hydroxide-ethanol solution as a titration reagent.

### (Resin Particle)

The ink includes the resin particle formed of the first resin and the second resin. The resin particle is present in the ink in a dispersed state, that is, in the form of a resin emulsion.

The resin particle is preferably a resin particle dispersed by the action of a carboxylic acid group of the resin particle (self-dispersion type) rather than that dispersed by a component, such as a surfactant or a resin (emulsification type). A so-called soap-free type resin emulsion is preferred. The resin particle is not required to encapsulate a coloring material. The total ratio (% by mass) of the first resin and the second resin in resins for forming the resin particle is preferably 50.0% by mass or more, more preferably 100.0% by mass with respect to the total mass of the resins. That is, it is preferred that the resin particle be substantially formed of only the first resin and the second resin.

The content (% by mass) of the resin particle in the aqueous ink is preferably 1.0% by mass or more to 10.0% by mass or less, more preferably 3.0% by mass or more to 8.0% by mass or less with respect to the total mass of the ink.

The term "resin particle" in the present disclosure means a resin that is present in a state of not being dissolved in the aqueous medium for forming the ink. More specifically, the term "resin particle" means a resin that may be present in an aqueous medium in a state of forming a particle whose particle diameter may be measured by a dynamic light scattering method. Meanwhile, the term "water-soluble resin" means a resin that is present in a state of being dissolved in the aqueous medium for forming the ink. More specifically, the term "water-soluble resin" means a resin that may be present in the aqueous medium in a state of not forming a particle whose particle diameter may be measured by the dynamic light scattering method. The resin particle is expressed as a counterpart to "water-soluble resin" to be "water-dispersible resin (water-insoluble resin)".

Whether or not a resin corresponds to the "resin particle" may be determined in accordance with a method described below. First, a liquid containing a resin to be determined is diluted with pure water to prepare a sample having a resin content of about 1.0%. Then, when the particle diameter of the resin in the sample is measured by the dynamic light scattering method, and the presence of a particle having a particle diameter is recognized, the resin is determined to be a "resin particle" (i.e., "water-dispersible resin"). Meanwhile, when the presence of a particle having a particle diameter is not recognized, it is determined that the resin is not a "resin particle" (i.e., is a "water-soluble resin"). Measurement conditions in this case may be set, for example, as follows: Set Zero: 30 seconds, number of measurements: 3 times, measurement time: 120 seconds, shape: perfectly spherical shape, refractive index: 1.5 and density: 1.0. A particle size analyzer based on the dynamic light scattering method (e.g., a product available under the product name "NANOTRAC WAVE II-Q" from MicrotracBEL) or the like may be used as a particle size distribution-measuring apparatus. Needless to say, the particle size distribution-measuring apparatus, the measurement conditions and the like to be used are not limited to the foregoing.

### [Physical Properties of Resin Particle]

### [Particle Diameter of Resin Particle]

The cumulative 50% particle diameter (D50a) of a volume-based particle size distribution indicating the particle diameter of the resin particle is preferably 100 nm or more to 300 nm or less. When the D50a is 100 nm or more, a surface area per mass of the resin particle becomes relatively small and a contact probability between the particles becomes lower. Accordingly, the aggregation of the resin particles is suppressed and the storage stability of the ink is further improved with ease. Meanwhile, when the D50a is 300 nm or less, irregularities derived from the resin particle in an image are suppressed after the recording of the image with the ink, and hence a situation in which a force is locally applied when a stress is applied to the image can be made less likely to occur. Accordingly, a situation in which unevenness remains in the image even when a crack or the like is not generated in the image itself is less likely to occur, and a situation in which an appearance similar to that when an abrasion resistance evaluation test is performed on an image inferior in abrasion resistance is obtained can be made less likely to occur. The D50a may be adjusted by a method of producing the resin particle to be described later. The D50a may be measured by the dynamic light scattering method under conditions similar to the method of determining "whether or not a resin corresponds to a resin particle" described above.

### [Surface Acid Group Amount of Resin Particle]

The surface acid group amount (µmol/g) of the resin particle is preferably 200 µmol/g or more to 500 µmol/g or less. The "surface acid group amount (µmol/g) of the resin particle" is represented by the amount (µmol) of an acid group such as a carboxylic acid group present on the particle surface of the resin particle per unit mass (g) of the resin particle. Accordingly, in a state in which all acid groups on the surface of the resin particle are dissociated, the surface acid group amount of the resin particle may also be expressed as an anionic group amount on the surface of the resin particle.

When the surface acid group amount of the resin particle is 200 µmol/g or more, the affinity of the resin particle for the aqueous medium in the aqueous ink is improved, and aggregation between the resin particles is less likely to occur. Accordingly, the storage stability of the ink is further improved with ease. Meanwhile, when the surface acid group amount of the resin particle is 500 µmol/g or less, the affinity of the resin particle for water is moderately suppressed, and hence it becomes easier to dry the ink after the recording of an image. Accordingly, when a stress is applied to the image, a scratch that may occur owing to an insufficiently dried portion can be easily avoided, and the abrasion resistance of the image is further improved with ease. The surface acid group amount of the resin particle may be adjusted by the ratio of the second resin in the resin particle, the acid value of the second resin, the particle diameter and a method of producing the resin particle. The surface acid group amount (µmol/g) of the resin particle may be measured by colloid titration utilizing a potential difference at a pH of 12 or more through use of a methyl glycol chitosan solution as a titration reagent.

### [Mass Ratio of First Resin to Second Resin]

The resin particle is formed of the first resin and the second resin. The content (% by mass) of the first resin in the resin particle is preferably 0.2 times or more to 5.1 times or less in terms of mass ratio to the content (% by mass) of the second resin. When the mass ratio of the content of the first resin to the content of the second resin is 0.2 times or more, the ratio of the first resin contributing to the impartment of abrasion resistance becomes sufficient, and the abrasion resistance is further improved with ease. Meanwhile, when the mass ratio of the content of the first resin to the content of the second resin is 5.1 times or less, the ratio of the second resin imparting an acid group to the resin particle is sufficient, and hence the affinity of the resin particle for the aqueous medium in the ink is easily improved. Accordingly, the storage stability of the ink is further improved with ease.

### [Composition Analysis of First Resin and Second Resin]

The composition of each of the first resin and the second resin for forming the resin particle may be analyzed by a method below. After a liquid containing the resin particle has been dried to provide a solid resin, the solid resin is dissolved in an organic solvent capable of dissolving the resin. The resin is separated into the first resin and the second resin by preparative gel permeation chromatography (GPC). Next, it is recognized that the olefin chain of the second resin is present in a graft shape by evaluating its degree of branching through use of a GPC with a multi-angle light scattering detector (MALS). In addition, the kinds and ratios of units (monomers) for forming the resin may be found by using nuclear magnetic resonance (NMR) spectroscopy, matrix-assisted laser desorption/ionization mass spectrometry (MALDI-MS) and a pyrolysis-gas chromatograph mass spectrometer (Py-GC/MS).

### [Method of producing Resin Particle]

A method of producing the resin particle is not limited as long as the resin particle described above can be obtained. Examples thereof may include a forced emulsification method and a phase inversion emulsification method. An example of the forced emulsification method may be a method of dispersing a resin by adding the resin to an aqueous liquid medium after bringing the resin into a dissolved state or a melted state. An example of the phase inversion emulsification method may be a method of precipitating a resin in the form of a particle in a process of phase inversion from a solvent system to an aqueous system by adding an aqueous liquid medium to a solution obtained by dissolving the resin in an organic solvent. In any method, a particle diameter to be obtained is preferably adjusted by dispersing the resin in an aqueous liquid medium, then performing dispersion treatment using a dispersion device such as a high-pressure homogenizer, and subjecting it to particle formation while applying moderate shear.

### (Pigment)

The ink may include a coloring material. A pigment or a dye may be used as the coloring material. The ink preferably includes a pigment out of those materials. The content (% by mass) of the pigment in the ink is preferably 0.1% by mass or more to 15.0% by mass or less, more preferably 1.0% by mass or more to 10.0% by mass or less with respect to the total mass of the ink.

Specific examples of the pigment may include an inorganic pigment and an organic pigment. Examples of the inorganic pigment may include carbon black and titanium oxide. Examples of the organic pigment may include an azo pigment, a phthalocyanine pigment, a quinacridone pigment, an isoindolinone pigment, an imidazolone pigment, a diketopyrrolopyrrole pigment, a dioxazine pigment and a perinone pigment. The pigments may be used alone or in combination thereof.

The pigment is preferably used in the form of a pigment dispersion liquid dispersed in the ink by some treatment. A resin-dispersed pigment using a resin (resin dispersant) as a dispersant, a self-dispersed pigment, in which a hydrophilic group is bonded to the particle surface of a pigment, or the like may be used as a pigment dispersion system. In addition, a resin-bonded pigment in which an organic group containing a resin is chemically bonded to a pigment particle surface, a microcapsule pigment, in which a pigment particle surface is coated with a resin or the like, or the like may be used. Pigments different from each other in dispersion system out of those pigments may also be used in combination. Of those, a resin-dispersed pigment, in which a resin serving as a dispersant is physically adsorbed on a pigment particle surface, or a self-dispersed pigment, in which an anionic group is bonded to a pigment particle surface directly or via another atomic group, is preferred.

### [Mass Ratio of Resin to Pigment]

The content (% by mass) of the resin (resin dispersant) in the ink is preferably 0.2 times or more to 2.5 times or less in terms of mass ratio to the content (% by mass) of the pigment. When the mass ratio of the content of the resin to the content of the pigment is 0.2 times or more, the amount of a resin component in a film for forming an image becomes relatively sufficient, and hence the abrasion resistance of the image is further improved with ease. Meanwhile, when the mass ratio of the content of the resin to the content of the pigment is 2.5 times or less, a total solid content in the ink is suppressed to a moderate value, and hence the collision probability of the pigment or the resin particle is reduced. Accordingly, the storage stability of the ink is further improved with ease.

### [Particle Diameter of Pigment Dispersion]

The cumulative 50% particle diameter (D50b) of the volume-based particle size distribution of the pigment is preferably 50 nm or more to 200 nm or less. When the D50b is 50 nm or more, a surface area per mass of the pigment becomes relatively small and a contact probability between the particles becomes lower. Accordingly, the aggregation of the pigment is suppressed and the storage stability of the ink is further improved with ease. Meanwhile, when the D50b is 200 nm or less, irregularities derived from the pigment in an image are suppressed after the recording of the image with the ink, and hence a direct stress is less likely to be applied to the pigment when a stress is applied to the image. Accordingly, the abrasion resistance of the image is further improved with ease. The D50b may be adjusted by the kind of the pigment and a method of dispersing the pigment.

The D50b may be measured by a dynamic light scattering method under conditions similar to the method of determining "whether or not a resin corresponds to a resin particle" described above.

### [Difference in Particle Diameter between Pigment and Resin Particle]

In addition, the cumulative 50% particle diameter (D50b) of the volume-based particle size distribution of the pigment is preferably equal to or smaller than the cumulative 50% particle diameter (D50a) of the volume-based particle size distribution of the resin particle. When the particle diameter (D50b) of the pigment is equal to or less than the particle diameter (D50a) of the resin particle, a probability that the resin particle appears on the outermost surface of the image rather than the pigment becomes higher, and hence a direct stress is less likely to be applied to the pigment when a stress is applied to the image. Accordingly, the abrasion resistance of the image is further improved with ease. From this viewpoint, a difference (D50a-D50b) of the cumulative 50% particle diameter (D50a) of the volume-based particle size distribution of the resin particle minus the cumulative 50% particle diameter (D50b) of the volume-based particle size distribution of the pigment is preferably 0 nm or more to 250 nm or less. The D50a-D50b is more preferably 1 nm or more to 240 nm or less, still more preferably 5 nm or more to 230 nm or less.

### (Aqueous Medium)

The ink is an aqueous ink including at least water as an aqueous medium. The ink may include an aqueous medium that is water or a mixed solvent of water and a water-soluble organic solvent. Deionized water (ion-exchanged water) is preferably used as the water. The content (% by mass) of the water in the ink is preferably 50.0% by mass or more to 95.0% by mass or less, more preferably 50.0% by mass or more to 90.0% by mass or less with respect to the total mass of the ink.

Any of solvents that may each be used in an ink for ink jet, such as alcohols, glycols, (poly)alkylene glycols, nitrogen-containing compounds and sulfur-containing compounds, may be used as the water-soluble organic solvent. The content (% by mass) of the water-soluble organic solvent in the ink is preferably 1.0% by mass or more to 46.0% by mass or less, more preferably 3.0% by mass or more to 40.0% by mass or less with respect to the total mass of the ink.

### (Other Components)

The ink may include a water-soluble organic compound that is solid at 25°C, for example, a polyhydric alcohol, such as trimethylolethane or trimethylolpropane, urea or a urea derivative such as ethylene urea, as required in addition to the above-mentioned components. Further, the ink may include any one of various additives, such as a surfactant, a pH adjuster, an antifoaming agent, a rust inhibitor, an antiseptic, an antifungal agent, an antioxidant, an anti-reducing agent and a chelating agent, as required. When a surfactant is used, the content (% by mass) of the surfactant in the ink is preferably 0.1% by mass or more to 5.0% by mass or less, more preferably 0.1% by mass or more to 2.0% by mass or less with respect to the total mass of the ink.

The ink may further include any other resin in addition to the above-mentioned resin particle (first resin and second resin) and the dispersant. A resin dispersant for dispersing a pigment or the like is also included in the other resin. A water-soluble resin is preferably used as the other resin. Examples of the form of the water-soluble resin may include a block copolymer, a random copolymer, a graft copolymer and combinations thereof. Examples of the water-soluble resin may include an acrylic resin, a urethane resin and an olefin resin. Of those, an acrylic resin or a urethane resin is preferred.

### (Physical Properties of Ink)

The ink of the present disclosure is an aqueous ink to be applied to an ink jet system. Accordingly, it is preferred that the physical properties thereof be appropriately controlled from the viewpoint of reliability. The viscosity of the ink at 25°C is preferably 1.0 mPa·s or more to 10.0 mPa·s or less, more preferably 1.0 mPa·s or more to 5.0 mPa·s or less, still more preferably 1.0 mPa·s or more to 3.0 mPa·s or less. In addition, the surface tension of the ink at 25°C is preferably 10 mN/m or more to 60 mN/m or less, more preferably 20 mN/m or more to 60 mN/m or less, still more preferably 30 mN/m or more to 50 mN/m or less. The pH of the ink at 25°C is preferably 5.0 or more to 10.0 or less, more preferably 7.0 or more to 9.5 or less.

### <Ink Cartridge>

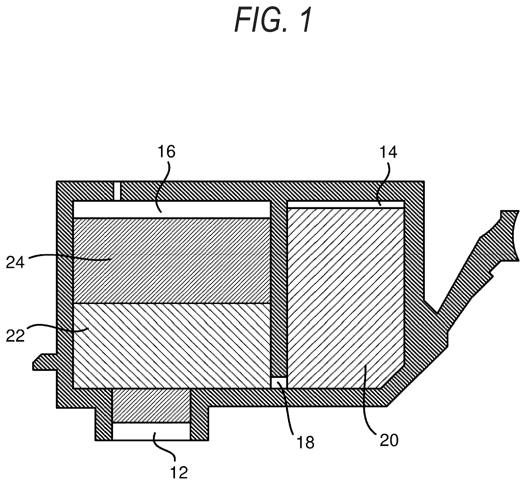

An ink cartridge of the present disclosure includes an ink and an ink storage portion configured to store the ink. In addition, the ink stored in the ink storage portion is the aqueous ink of the present disclosure described above. Fig. 1 is a sectional view for schematically illustrating an ink cartridge according to one embodiment of the present disclosure. As illustrated in Fig. 1, an ink supply port 12 for supplying an ink to a recording head is arranged on the bottom surface of the ink cartridge. The inside of the ink cartridge is the ink storage portion for storing the ink. The ink storage portion includes an ink storage chamber 14 and an absorbent storage chamber 16, and the chambers communicate to each other through a communication port 18. In addition, the absorbent storage chamber 16 communicates to the ink supply port 12. While a liquid ink 20 is stored in the ink storage chamber 14, absorbents 22 and 24 each of which holds the ink in a state of being impregnated therewith are stored in the absorbent storage chamber 16. The ink storage portion may be configured to be free of an ink storage chamber that stores the liquid ink and to hold the total amount of the ink to be stored with the absorbents. In addition, the ink storage portion may be configured to be free of an absorbent and to store the total amount of the ink in a liquid state.

Further, an ink cartridge configured to include the ink storage portion and a recording head may be adopted.

### <Ink Jet Recording Method>

An ink jet recording method of the present disclosure is a method including ejecting the aqueous ink of the present disclosure described above from a recording head of an ink jet system to record an image on a recording medium. A system of ejecting the ink is, for example, a system involving applying mechanical energy to the ink or a system involving applying thermal energy to the ink. In the present disclosure, the system involving applying the thermal energy to the ink to eject the ink is particularly preferably adopted. The step of the ink jet recording method only needs to be a known step except that the ink of the present disclosure is used.

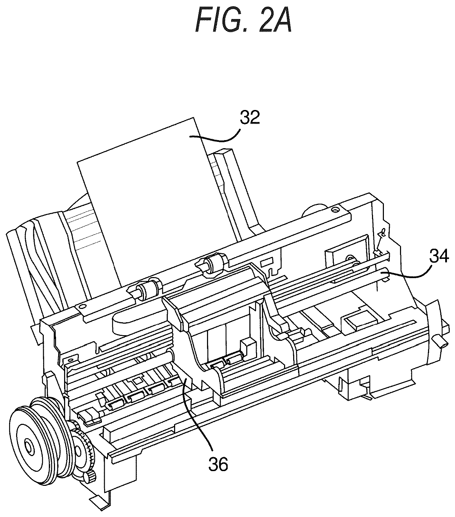

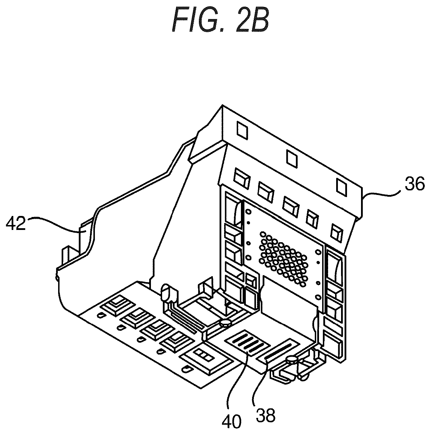

Fig. 2A and Fig. 2B are views for schematically illustrating an example of an ink jet recording apparatus to be used in the ink jet recording method of the present disclosure. Fig. 2A is a perspective view of the main portion of the ink jet recording apparatus and Fig. 2B is a perspective view of a head cartridge. A conveying unit (not shown) that conveys a recording medium 32, and a carriage shaft 34 are arranged in the inkjet recording apparatus. A head cartridge 36 may be mounted on the carriage shaft 34. The head cartridge 36 includes recording heads 38 and 40, and is formed so that an ink cartridge 42 may be set therein. While the head cartridge 36 is conveyed along the carriage shaft 34 in a main scanning direction, the ink (not shown) is ejected from the recording heads 38 and 40 toward the recording medium 32. Then, the recording medium 32 is conveyed by the conveying unit (not shown) in a sub-scanning direction. Thus, the image is recorded on the recording medium 32.

Any kind of recording medium may be used as the recording medium on which an image is to be recorded with the ink of the present disclosure. Recording media each having ink absorbency, for example, recording media having no coat layer such as plain paper and recording media each having a coat layer, such as glossy paper and matte paper, may be used. In addition, recording media each having low ink absorbency or no ink absorbency, for example, a printed sheet, coated paper, a resin sheet and a resin film may be used. The ink of the present disclosure may be suitably used for applications in which an ink is directly applied to such recording medium to record an image.

### EXAMPLES

The present disclosure is described in more detail below by way of Examples and Comparative Examples. However, the present disclosure is by no means limited to Examples below, and various modifications are possible without departing from the gist of the present disclosure. In the description of the amounts of components, "part(s)" and "%" are by mass unless otherwise specified.

### <Methods of measuring Physical Properties>

### (Melting Point of Resin)

A solid or powder resin was prepared as a measurement sample, and a melting peak temperature measured in conformity with JIS K 7121 with a differential scanning calorimeter (product name: "Q1000", manufactured by TA Instruments) was defined as a "melting point." It was determined that a melting peak was obtained when an endothermic amount obtained from the integral value of a peak was 20 J/g or more, and the melting peak temperature was defined as a "melting point."

### (Acid Value of Resin)

A resin particle was precipitated by using a 1.0 mol/L hydrochloric acid aqueous solution, sufficiently washed with water, and then dried at 60°C. After the resultant dried product was added to 50 mL of tetrahydrofuran at 50°C to be dissolved, 5 mL of water was added thereto and the mixture was cooled to room temperature to provide a measurement sample. Neutralization titration was performed on the resultant measurement sample to measure the acid value of the resin. A potentiometric automatic titrator (product name: "AT510", manufactured by Kyoto Electronics Manufacturing Co., Ltd.) including a combined glass electrode (product name: "C-171", manufactured by Kyoto Electronics Manufacturing Co., Ltd.) was used for the neutralization titration. A 0.5 mol/L potassium hydroxide-ethanol solution was used as a titration reagent.

### (Determination of whether or not Sample is Particle, Particle Diameter)

With regard to a resin particle dispersion liquid and a pigment dispersion liquid to be described later, a resin particle or a pigment was used as a sample, and a liquid containing the sample was diluted with pure water to prepare a measurement sample in which the content of the sample was adjusted to about 1.0%. Then, the cumulative 50% particle diameter (D50) of the volume-based particle size distribution of a particle (resin particle or pigment) in the measurement sample was measured with a particle size measuring device. Measurement conditions in this case are described below. A particle size distribution meter based on a dynamic light scattering method (product name: "NANOTRAC WAVE II-Q", manufactured by MicrotracBEL) was used as the particle size measuring device. When the presence of a particle having a particle diameter was recognized by the above-mentioned method, it was determined that the sample was a "particle" (was a "water dispersion liquid"), and when the presence of a particle having a particle diameter was not recognized, it was determined that the sample was not a "particle" (was an "aqueous solution").

### [Measurement Conditions]

Set Zero: 30 seconds
Number of measurements: 3 times
Measurement time: 120 seconds
Shape: perfectly spherical shape
Refractive index: 1.5
Density: 1.0

### (Surface Acid Group Amount of Resin Particle)

A liquid containing a resin particle adjusted to a pH of 12 was used as a sample, and the surface acid group amount of the resin particle (amount of a carboxylic acid group on the particle surface of the resin particle) was measured by colloid titration utilizing a potential difference.

A potentiometric automatic titrator (product name: "AT510", manufactured by Kyoto Electronics Manufacturing Co., Ltd.) including a streaming potential titration unit (product name: "PCD-500", manufactured by Kyoto Electronics Manufacturing Co., Ltd.) was used for the colloid titration.

A 0.005 mol/L methyl glycol chitosan solution was used as a titration reagent. <First Resins P-1 to P-8>

Resins shown in Table 1 were used as first resins. The product names, polyolefin kinds and melting points of the first resins P-1 to P-8 are shown in Table 1.

**Table 1: Kinds of first resins**

| First resin | Product name | Kind of polyolefin | Melting point [°C] |
|---|---|---|---|
| P-1 | KN KS571T (manufactured by Japan Polyethylene Corporation) | Polyethylene | 100 |
| P-2 | KN KS240T (manufactured by Japan Polyethylene Corporation) | Polyethylene | 60 |
| P-3 | KN KS560T (manufactured by Japan Polyethylene Corporation) | Polyethylene | 90 |
| P-4 | FT115 (manufactured by Nippon Seiro Co.. Ltd.) | Fischer-Tropsch wax | 113 |
| P-5 | NOVATEC LL UJ370 (manufactured by Japan Polyethylene Corporation) | Polyethylene | 120 |
| P-6 | NOVATEC HD HK111K (manufactured by Japan Polvethylene Corporation) | Polyethylene | 130 |
| P-7 | KN KC452T (manufactured by Japan Polyethylene Corporation) | Polyethylene | 54 |
| P-8 | NOVATEC LL HF560 (manufactured by Japan Polyethylene Corporation) | Polyethylene | 134 |

### <Synthesis of Second Resins Q-1 to Q-18>

Second resins Q-1 to Q-18 were synthesized in accordance with a procedure described below. In accordance with a copolymerization reaction between an α-olefin and maleic anhydride described in Example 1 of Japanese Patent Laid-Open No. H01-79207, the synthesis was performed by replacing the α-olefin and maleic anhydride with olefins and unsaturated acids shown in Table 2, to provide the second resins Q-1 to Q-18. The kinds and usage amounts of olefins and unsaturated acids used for forming the second resins Q-1 to Q-18, and the acid values of the resultant second resins are shown in Table 2. Of the kinds of olefins shown in Table 2, those except 2-butene are α-olefins. In addition, out of the kinds of unsaturated acids shown in Table 2, those except acrylic acid are unsaturated dibasic acids.

**Table 2: Kinds of second resins**

| Second resin | Olefin | | | Unsaturated acid | | Physical property |
|---|---|---|---|---|---|---|
| | Kind | Number of carbon atoms | Usage amount | Kind | Usage amount | Acid value |
| | | | [part(s)] | | [part(s)] | [mgKOH/g] |
| Q-1 | 1-Octadecene | 18 | 90 | Maleic acid | 10 | 100 |
| Q-2 | 1-Octadecene | 18 | 90 | Fumaric acid | 10 | 100 |
| Q-3 | 1-Octadecene | 18 | 90 | Itaconic acid | 10 | 89 |
| Q-4 | 1-Butene | 4 | 90 | Maleic acid | 10 | 100 |
| Q-5 | 1-Octene | 8 | 90 | Maleic acid | 10 | 100 |
| Q-6 | 1-Decene | 10 | 90 | Maleic acid | 10 | 100 |
| Q-7 | 1-Triacontene | 30 | 90 | Maleic acid | 10 | 100 |
| Q-8 | 1-Dotriacontene | 32 | 90 | Maleic acid | 10 | 100 |
| Q-9 | 1-Octadecene | 18 | 98 | Maleic acid | 2 | 20 |
| Q-10 | 1-Octadecene | 18 | 97 | Maleic acid | 3 | 30 |
| Q-11 | 1-Octadecene | 18 | 75 | Maleic acid | 25 | 250 |
| Q-12 | 1-Octadecene | 18 | 73 | Maleic acid | 27 | 260 |
| Q-13 | 1-Octadecene | 18 | 95 | Maleic acid | 5 | 51 |
| Q-14 | 1-Octadecene | 18 | 78 | Maleic acid | 22 | 216 |
| Q-15 | 1-Octene | 8 | 99 | Fumaric acid | 1 | 13 |
| Q-16 | 2-Butene | 4 | 90 | Maleic acid | 10 | 100 |
| Q-17 | 1-Octadecene | 18 | 92 | Acrylic acid | 8 | 127 |
| Q-18 | Propylene | 3 | 90 | Maleic acid | 10 | 100 |

### <Preparation of Dispersion Liquids of Resin Particles E-1 to E-38>

Resin particles E-1 to E-38 were synthesized in accordance with a procedure described below. 700 parts of ion-exchanged water and an 8 mol/L potassium hydroxide (KOH) aqueous solution whose usage amount was shown in Table 3 were added into a pressure vessel including a stirring device and heated to 120°C. A first resin and a second resin whose kinds and usage amounts were shown in Table 3 were heated and added to the pressure vessel in a melted state, and the mixture was stirred to provide an emulsion. The resultant emulsion was passed 10 times through a high-pressure homogenizer (product name: "NANOVATER", manufactured by Yoshida Kikai Kogyo Co., Ltd.) heated to 120°C with a heating option. An appropriate amount of ion-exchanged water was added to the emulsion to provide dispersion liquids of the resin particles E-1 to E-38 in each of which the content of its resin (solid content) was 20.0%. In the synthesis of each of the resin particles E-36 and E-37, a dried product of a product available under the product name "Hi-Wax 1105A" (manufactured by Mitsui Chemicals, Inc., shown as "1105A" in Table 3), which was a maleic acid-modified polyethylene wax, was used as the second resin. As the second resin, we used the "water-insoluble polymer (iii)" (shown as "(iii)" in Table 3.) described in Japanese Patent Laid-Open No. 2023-6722, which was synthesized according to the method described therein. The "water-insoluble polymer (iii)" is a styrene-acrylic acid-ethyl acrylate copolymer. The term "first resin/second resin [times]" shown in Table 3 refers to the mass ratio of the content (%) of the first resin to the content (%) of the second resin in the resin particle. In addition, Table 3 shows the cumulative 50% particle diameters (D50a, nm) of the volume-based particle size distributions, and surface acid group amounts (µmol/g), of the resultant resin particles.

**Table 3: Kinds of the resin particles**

| Resin particle | First resin | | Second resin | | First resin/second resin [times] | KOH aqueous solution | Physical properties | |
|---|---|---|---|---|---|---|---|---|
| | Kind | Usage amount | Kind | Usage amount | | Usage amount | D₅₀ₐ | Anionic group amount |
| | | [part(s)] | | [part(s)] | | [part(s)] | [nm] | [µmol/g] |
| E-1 | P-1 | 100 | Q-1 | 100 | 1 | 11.8 | 180 | 360 |
| E-2 | P-2 | 100 | Q-1 | 100 | 1 | 11.8 | 180 | 360 |
| E-3 | P-3 | 100 | Q-1 | 100 | 1 | 11.8 | 180 | 360 |
| E-4 | P-4 | 100 | Q-1 | 100 | 1 | 11.8 | 180 | 360 |
| E-5 | P-5 | 100 | Q-1 | 100 | 1 | 11.8 | 180 | 360 |
| E-6 | P-6 | 100 | Q-1 | 100 | 1 | 11.8 | 180 | 360 |
| E-7 | P-1 | 100 | Q-2 | 100 | | 11.8 | 180 | 360 |
| E-8 | P-1 | 100 | Q-3 | 100 | 1 | 10.5 | 180 | 320 |
| E-9 | P-1 | 100 | Q-4 | 100 | 1 | 11.8 | 180 | 360 |
| E-10 | P-1 | 100 | Q-5 | 100 | 1 | 11.8 | 180 | 360 |
| E-11 | P-1 | 100 | Q-6 | 100 | 1 | 11.8 | 180 | 360 |
| E-12 | P-1 | 100 | Q-7 | 100 | 1 | 11.8 | 180 | 360 |
| E-13 | P-1 | 100 | Q-8 | 100 | 1 | 11.8 | 180 | 360 |
| E-14 | P-1 | 40 | Q-9 | 160 | 0.3 | 7.6 | 120 | 230 |
| E-15 | P-1 | 40 | Q-10 | 160 | 0.3 | 11.4 | 120 | 340 |
| E-16 | P-1 | 110 | Q-11 | 90 | 12 | 12 | 220 | 360 |
| E-17 | P-1 | 160 | Q-11 | 40 | 4 | 8.9 | 220 | 270 |
| E-18 | P-1 | 160 | Q-12 | 40 | 4 | 92 | 220 | 280 |
| E-19 | P-1 | 150 | Q-1 | 50 | 3 | 5.9 | 180 | 180 |
| E-20 | P-1 | 145 | Q-1 | 55 | 2.6 | **6.5** | 180 | 200 |
| E-21 | P-1 | 60 | Q-1 | 140 | 0.4 | 16.6 | 180 | 500 |
| E-22 | P-1 | 55 | Q-1 | 145 | 0.4 | 17.2 | 180 | 520 |
| E-23 | P-1 | 140 | Q-1 | 60 | 2.3 | 14.6 | 90 | 440 |
| E-24 | P-1 | 140 | Q-1 | 60 | 23 | 14.4 | 100 | 430 |
| E-25 | P-1 | 100 | Q-1 | 100 | 1 | 7.4 | 300 | 220 |
| E-26 | P-1 | 100 | Q-1 | 100 | 1 | 7.1 | 320 | 210 |
| E-27 | P-1 | 25 | Q-13 | 175 | 0.1 | 10.6 | 180 | 320 |
| E-28 | P-1 | 34 | Q-13 | 164 | 02 | 9.9 | 180 | 300 |
| E-29 | P-1 | 167 | Q-14 | 33 | 5.1 | **8.4** | 180 | 250 |
| E-30 | P-1 | 171 | Q-14 | 29 | 5.9 | 7.4 | 180 | 220 |
| E-31 | P-7 | 100 | Q-1 | 100 | 1 | 11.8 | 180 | 360 |
| E-32 | P-8 | 100 | Q-1 | 100 | 1 | 11.8 | 180 | 360 |
| E-33 | P-1 | 100 | Q-16 | 100 | 1 | 11.8 | 180 | 360 |
| E-34 | P-1 | 100 | Q-17 | 100 | 1 | 15 | 180 | 450 |
| E-35 | P-1 | 100 | Q-18 | 100 | 1 | 11.8 | 180 | 360 |
| E-36 | P-1 | 100 | 1105A | 100 | 1 | - | 180 | 360 |
| E-37 | P-1 | 40 | 1105A | 160 | 03 | - | 120 | 340 |
| E-38 | P-1 | 100 | (iii) | 100 | 1 | - | 160 | 170 |

### <Preparation of Pigment Dispersion Liquids D-1 to D-3>

A mixture of 10.0 parts of a pigment whose kind was shown in Table 4, 20.0 parts of a resin-containing liquid, and 70.0 parts of ion-exchanged water was loaded into a batch-type vertical sand mill (manufactured by IMEX Co., Ltd.) filled with 200 parts of zirconia beads each having a diameter of 0.3 mm, and was dispersed for a predetermined time. The abbreviations of pigments shown in Table 3 each have the following meaning: "NIPex90": the product name of carbon black manufactured by Orion Engineered Carbons; "PB 15:3": C.I. Pigment Blue 15:3; and "PR 122": C.I. Pigment Red 122. An aqueous solution having a resin content of 30.0%, which was obtained by dissolving a water-soluble resin in water containing potassium hydroxide in an amount equimolar to the acid value of the resin, was used as the resin-containing liquid. The water-soluble resin used in this case is a styrene-ethyl acrylate-acrylic acid copolymer having an acid value of 167 mgKOH/g and a weight average molecular weight of 10,000. After that, centrifugal separation was performed to remove a coarse particle, and pressure filtration was performed with a microfilter having a pore size of 3.0 µm (manufactured by FUJIFILM Corporation), followed by the addition of an appropriate amount of deionized water to adjust the content of the pigment. Thus, pigment dispersion liquids D-1 to D-3 in each of which the pigment content was 10.0% were obtained. The cumulative 50% particle diameters (D50b, nm) of the volume-based particle size distributions of the pigments in the resultant pigment dispersion liquids are shown in Table 4.

### <Preparation of Pigment Dispersion Liquid D-4>

A solution obtained by dissolving 5.0 g of concentrated hydrochloric acid in 5.5 g of water was cooled to 5°C, and 1.6 g of 4-aminophthalic acid was added to the solution in the state. A vessel containing the solution was loaded into an ice bath, and while the solution was stirred and its temperature was held at 10°C or less, a solution obtained by dissolving 1.8 g of sodium nitrite in 9.0 g of ion-exchanged water at 5°C was added thereto. After the mixture was stirred for 15 minutes, 6.0 g of carbon black (product name: "NIPex90", manufactured by Orion Engineered Carbons) was added thereto under stirring.

The mixture was further stirred for 15 minutes to provide a slurry. The resultant slurry was filtered with filter paper (product name: "standard filter paper No. 2", manufactured by ADVANTEC), and its particle was sufficiently washed with water and dried in an oven at 110°C. After that, sodium ions were replaced with potassium ions by an ion-exchange method to provide a pigment dispersion liquid D-4 containing a self-dispersed pigment in which a -C6H3-(COOK)2 group was bonded to the particle surface of carbon black. The content of the self-dispersed pigment in the pigment dispersion liquid D-4 was 10.0%. The kind of the pigment used for the preparation of the pigment dispersion liquid D-4 and the cumulative 50% particle diameter (D50b, nm) of the volume-based particle size distribution of the pigment in the resultant pigment dispersion liquid D-4 are shown in Table 4.

**Table 4: Kinds of pigment dispersion liquids**

| Pigment dispersion liquid | Pigment | Physical property |
|---|---|---|
| | Kind | D_{50b} [nm] |
| D-1 | NIPex90 | 80 |
| D-2 | PB 15:3 | 90 |
| D-3 | PR 122 | 120 |
| D-4 | NIPex90 | 80 |

### <Preparation of Ink>

### (Examples 1 to 41 and Comparative Examples 1 to 8)

The following respective components were mixed, thoroughly stirred, and then filtered under pressure with a microfilter having a pore size of 2.5 µm to prepare inks. Of the components shown below, "Acetylenol E100" is the product name of a nonionic surfactant (manufactured by Kawaken Fine Chemicals Co., Ltd.). The kinds of the pigment dispersion liquids and resin particles used for the inks, and the respective contents (%) of the pigments and resin particles in the inks are shown in Table 5 (Tables 5-1 and 5-2). The values of (particle diameter (D50a, nm) of resin particle)-(particle diameter (D50b, nm) of pigment) are also shown in Table 5.
·Pigment dispersion liquid: amount resulting in a pigment content (%) shown in Table 5
·Resin particle dispersion liquid: amount resulting in a resin particle content (%) shown in Table 5
·Glycerin: 5.0%
·Triethylene glycol: 10.0%
·Acetylenol E100: 0.1%
·Ion-exchanged water: such a residual amount (%) that the total of components becomes 100.0%

### (Comparative Example 9)

The "Resin Emulsion B1" described in Japanese Patent Laid-Open No. 2012-255089, which was produced according to the method described therein, was used in place of the resin particles E-1 of Example 1, and the same evaluation was performed. The abrasion resistance of an image to be described later was evaluated as "B", and the storage stability of an ink was evaluated as "C". The "Resin Emulsion B1" is an emulsion containing polyethylene wax (Product name: HIWAX 210P, manufactured by Mitsui Chemicals, Inc.) and maleic acid-modified polyethylene wax (Product name: HIWAX 1105 A, manufactured by Mitsui Chemicals, Inc.) as resin components.

### (Comparative Example 10)

The "Wax Dispersion W7" described in Japanese Patent Laid-Open No. 2023-6722, which was produced according to the method described therein, was used in place of the resin particles E-1 of Example 1, and the same evaluation was performed. The abrasion resistance of an image to be described later was evaluated as "C", and the storage stability of an ink was evaluated as "B-". The "Wax Dispersion W7" is an emulsion containing polyethylene wax (Product name: HIWAX 110P, manufactured by Mitsui Chemicals, Inc.) and the "water-insoluble polymer (iii)" as resin components.

### <Evaluation>

In this evaluation, the levels "A" and "B" were defined as acceptable levels, and the level "C" was defined as an unacceptable level in evaluation criteria for each item shown below. Even within the same evaluation criteria, in a case where a clear difference was observed, one relatively excellent among the level "B" was defined as "B+", and one relatively inferior was defined as "B-".

The evaluation results are shown in Tables 5-1 and 5-2.

### (Abrasion Resistance)

Each of the prepared inks was loaded into an ink cartridge and the cartridge was set in an ink jet recording apparatus (product name: "PIXUS iP3100", manufactured by CANON KABUSHIKI KAISHA) that ejected an ink from a recording head through the action of thermal energy. In Examples, the recording duty of a solid image recorded under such a condition that one ink droplet whose amount is 5 pL per droplet is applied to a unit region measuring 1/1,200 inch by 1/1,200 inch is defined as 100%. A solid image of 200 mm×200 mm (recording duty: 100%) was recorded on a recording medium (product name: "AURORA COAT", manufactured by Nippon Paper Industries Co., Ltd.) by using the above-mentioned ink jet recording apparatus. After the recorded solid image was left for one day, a friction test was performed under the condition of 10 reciprocations with a load of 500 g by using a Gakushin-type tester (product name: "Abrasion Tester", manufactured by Imoto Machinery Co., Ltd.) capable of performing measurement in conformity with JIS L 0849. The image after the friction test was visually observed, and the abrasion resistance of the image was evaluated in accordance with evaluation criteria described below.
A: No abrasion mark was attached to the image, or an abrasion mark was at such a level that the mark was not understandable unless observed by bringing the recording medium closer.
B: An abrasion mark was able to be observed on the image when viewed from a distance, but the recording medium (base) was not visible.
C: An abrasion mark was attached to the image, and the recording medium (base) was visible.

### (Storage Stability)

Each of the prepared inks was loaded into a sealed container made of polytetrafluoroethylene and stored at 40°C for 3 months. The viscosity η1 (mPa·s) of the ink before the storage and the viscosity η2 (mPa·s) of the ink after the storage were measured. The measurement of the viscosity of the ink was performed at 25°C with a rotational viscometer (product name: "TV-200E type viscometer", manufactured by Toki Sangyo Co., Ltd.). Then, the change rate (P (%)) of the viscosity of the ink was calculated from the equation "change rate P={(η2-η1)/η1}×100 (%)", and the storage stability of the ink was evaluated in accordance with evaluation criteria below. A large value of the change rate means that the dispersion state of the resin particle becomes unstable, and the ink thickens owing to increases in particle diameters or the aggregation of the resin particles, and hence the storage stability of the ink is low.
A: The change rate was less than 5%.
B: The change rate was 5% or more to less than 10%.
C: The change rate was 10% or more.

**Table 5-1: Kinds and amounts of pigment dispersion liquids and resin particles used for inks, and evaluation results**

| | | **Pigment dispersion liquid** | | **Resin particle dispersion liquid** | | **D₅₀ₐ-D_{50b}** | **Evaluation results** | |
|---|---|---|---|---|---|---|---|---|
| | | **Kind** | **Pigment content [%]** | **Kind** | **Resin particle content [%]** | **[nm]** | **Abrasion resistance** | **Storage stability** |
| | 1 | D-1 | 4 | E-1 | 5 | 100 | A | A |
| | 2 | D-1 | 4 | E-2 | 5 | 100 | B | B |
| | 3 | D-1 | 4 | E-3 | 5 | 100 | A | A |
| | 4 | D-1 | 4 | E-4 | 5 | 100 | B+ | A |
| | 5 | D-1 | 4 | E-5 | 5 | 100 | A | A |
| | 6 | D-1 | 4 | E-6 | 5 | 100 | B | A |
| | 7 | D-1 | 4 | E-7 | 5 | 100 | A | B+ |
| | 8 | D-1 | 4 | E-8 | 5 | 100 | A | B+ |
| | 9 | D-1 | 4 | E-9 | 5 | 100 | A | B |
| | 10 | D-1 | 4 | E-10 | 5 | 100 | A | B+ |
| | 11 | D-1 | 4 | E-11 | 5 | 100 | A | A |
| | 12 | D-1 | 4 | E-12 | 5 | 100 | A | A |
| Example | 13 | D-1 | 4 | E-13 | 5 | 100 | A | B |
| | 14 | D-1 | 4 | E-14 | 5 | 40 | A | B |
| | 15 | D-1 | 4 | E-15 | 5 | 40 | A | A |
| | 16 | D-1 | 4 | E-16 | 5 | 140 | A | A |
| | 17 | D-1 | 4 | E-17 | 5 | 140 | A | B |
| | 18 | D-1 | 4 | E-18 | 5 | 140 | A | B- |
| | 19 | D-1 | 4 | E-19 | 5 | 100 | A | B |
| | 20 | D-1 | 4 | E-20 | 5 | 100 | A | A |
| | 21 | D-1 | 4 | E-21 | 5 | 100 | A | A |
| | 22 | D-1 | 4 | E-22 | 5 | 100 | B | A |
| | 23 | D-1 | 4 | E-23 | 5 | 10 | A | B |
| | 24 | D-1 | 4 | E-24 | 5 | 20 | A | A |
| | 25 | D-1 | 4 | E-25 | 5 | 220 | A | A |

**Table 5-2: Kinds and amounts of pigment dispersion liquids and resin particles used for inks, and evaluation results.**

| | | Pigment dispersion liquid | | Resin particle dispersion liquid | | D₅₀ₐ-D_{50b} | Evaluation results | |
|---|---|---|---|---|---|---|---|---|
| | | Kind | Pigment content [%] | Kind | Resin particle content [%] | [nm] | Abrasion resistance | Storage stability |
| | 26 | D-1 | 4 | E-26 | 5 | 240 | B | A |
| | 27 | D-1 | 4 | E-27 | 5 | 100 | B | A |
| | 28 | D-1 | 4 | E-28 | 5 | 100 | A | A |
| | 29 | D-1 | 4 | E-29 | 5 | 100 | A | B |
| | 30 | D-1 | 4 | E-30 | 5 | 100 | A | B- |
| | 31 | D-2 | 4 | E-1 | 5 | 90 | A | A |
| | 32 | D-3 | 4 | E-1 | 5 | 60 | A | A |
| Example | 33 | D-4 | 4 | E-1 | 5 | 100 | A | A |
| | 34 | - | - | E-1 | 5 | - | A | A |
| | 35 | D-3 | 4 | E -23 | 5 | -30 | B | A |
| | 36 | D-3 | 4 | E-15 | 5 | 0 | B+ | A |
| | 37 | D-1 | 4 | E-1 | 0.5 | 100 | B | A |
| | 38 | D-1 | 4 | E-1 | 1 | 100 | A | A |
| | 39 | D-1 | 4 | E-1 | 10 | 100 | A | A |
| | 40 | D-1 | 4 | E-1 | 11 | 100 | A | B |
| | 41 | - | - | E-17 | 0.5 | - | B | B- |
| | 1 | D-1 | 4 | E-31 | 5 | 100 | C | C |
| | 2 | D-1 | 4 | E-32 | 5 | 100 | C | A |
| | 3 | D-1 | 4 | E-33 | 5 | 100 | B | C |
| Comparative Example | 4 | D-1 | 4 | E-34 | 5 | 100 | B | C |
| | 5 | D-1 | 4 | E-35 | 5 | 100 | B | C |
| | 6 | D-1 | 4 | E-36 | 5 | 100 | C | C |
| | 7 | D-1 | 4 | E-37 | 5 | 40 | C | C |
| | 8 | D-1 | 4 | E-38 | 5 | 120 | C | B- |

Various embodiments have been described in detail above but it will be understood that the present disclosure is not limited to these embodiments and encompasses all modifications, variants, alternatives and equivalents falling within the scope of the appended claims.

## Claims

1. An aqueous ink for ink jet comprising a resin particle,
wherein the resin particle is formed of a first resin and a second resin,
wherein the first resin is a polyolefin resin having a melting point of 60°C or more to 130°C or less, and
wherein the second resin is a copolymer having a unit derived from an α-olefin having 4 or more carbon atoms and a unit derived from an unsaturated dibasic acid.

2. The aqueous ink according to claim 1, wherein the second resin has an acid value of 30 mgKOH/g or more to 250 mgKOH/g or less.

3. The aqueous ink according to claim 1 or 2, wherein the α-olefin has 10 or more to 30 or less carbon atoms.

4. The aqueous ink according to any one of claims 1 to 3, wherein the unsaturated dibasic acid contains maleic acid.

5. The aqueous ink according to any one of claims 1 to 4, wherein the polyolefin resin contains polyethylene.

6. The aqueous ink according to any one of claims 1 to 5, wherein the polyolefin resin contains polyethylene having a melting point of 90°C or more to 120°C or less.

7. The aqueous ink according to any one of claims 1 to 6, wherein a surface acid group amount (µmol/g) of the resin particle is 200 µmol/g or more to 500 µmol/g or less.

8. The aqueous ink according to any one of claims 1 to 7, wherein the resin particle has a cumulative 50% particle diameter (D₅₀ₐ) of a volume-based particle size distribution of 100 nm or more to 300 nm or less.

9. The aqueous ink according to any one of claims 1 to 8, wherein a content (% by mass) of the first resin in the resin particle is 0.2 times or more to 5.1 times or less in terms of mass ratio to a content (% by mass) of the second resin.

10. The aqueous ink according to any one of claims 1 to 9, further comprising a pigment.

11. The aqueous ink according to claim 10, wherein a cumulative 50% particle diameter (D_{50b}) of a volume-based particle size distribution of the pigment is equal to or smaller than a cumulative 50% particle diameter (D₅₀ₐ) of a volume-based particle size distribution of the resin particle.

12. The aqueous ink according to any one of claims 1 to 11, wherein a content (% by mass) of the resin particle in the aqueous ink is 1.0% by mass or more to 10.0% by mass or less with respect to a total mass of ink.

13. An ink cartridge comprising an ink and an ink storage portion configured to store the ink,
wherein the ink is the aqueous ink according to any one of claims 1 to 12.

14. An ink jet recording method comprising ejecting an ink from a recording head of an ink jet system to record an image on a recording medium,
wherein the ink is the aqueous ink according to any one of claims 1 to 12.
